# DEMANDE DE BREVET EUROPEEN

(11) **EP 0 581 644 A1**
(43) Date de publication de la demande: **02.02.1994**
(21) Numéro de dépôt: 93401879.7
(22) Date de dépôt: 21.07.1993
(51) Int. Cl.: F28D 7/16, B60H 1/06

(54) **Dispositif échangeur de chaleur, système compact de refroidissement et de chauffage et système de climatisation comportant un tel dispositif échangeur de chaleur, notamment pour véhicule automobile**

(30) Priorité: 30.07.1992 FR 9209478
(71) Demandeur: Société Anonyme dite: REGIE NATIONALE DES USINES RENAULT, F-92109 Boulogne Billancourt (FR)
(72) Inventeur: Pannier, René, F-78220 Viroflay (FR)

(57) **Abrégé**

Le dispositif échangeur de chaleur comprend une boîte d'entrée (12) recevant un premier fluide thermique, une boîte de sortie (13) déchargeant ce premier fluide thermique et un ensemble d'éléments (15) faisant communiquer l'intérieur de la boîte d'entrée avec l'intérieur de la boîte de sortie, un second fluide thermique circulant autour de l'ensemble d'éléments (15) en relation d'échange thermique avec le premier fluide thermique, les boîtes d'entrée et de sortie (12, 13) étant constituées par des anneaux de section droite quelconque et de révolution ou non et l'ensemble d'éléments (15) étant constitué par un faisceau de tubes montés en entretoise entre les boîtes d'entrée et de sortie (12, 13).

Application aux systèmes de refroidissement et de chauffage de véhicules automobiles.

## Description

La présente invention concerne d'une manière générale un nouveau dispositif échangeur de chaleur, notamment pour véhicule automobile.

La présente invention concerne également un nouveau système compact de refroidissement et de chauffage ainsi qu'un nouveau système de climatisation pour véhicule automobile comportant un tel dispositif échangeur de chaleur.

Dans les système de refroidissement et de chauffage, notamment de véhicule automobile, on utilise à l'heure actuelle deux dispositifs échangeurs de chaleur (radiateurs), un pour chauffer l'habitacle du véhicule, l'autre pour refroidir le moteur. Ainsi une partie des calories contenues dans le circuit d'eau de refroidissement du moteur est récupérée pour le chauffage, l'autre est irrémédiablement perdue. De plus le parcours de l'air n'étant pas géré, il en résulte un échauffement de l'air sous le capot et des pertes au niveau de l'efficacité thermique.

Plus particulièrement, les circuits de refroidissement et de chauffage actuels sont constitués de deux circuits d'eau en parallèle et de deux circuits d'air indépendants.

Les deux circuits d'eau sont indépendants dans leur fonction mais interactifs dans leur fonctionnement. Les circuits d'air sont totalement indépendants.

Le circuit d'eau de refroidissement du moteur comprend généralement un dispositif échangeur de chaleur (radiateur), un bocal de dégazage, une pompe à eau sur le moteur, un thermostat pour la mise en route du circuit et des durites de liaison. Le circuit d'eau de refroidissement est toujours fermé à la mise en marche du moteur. C'est le thermostat qui gère l'ouverture et la fermeture du circuit. Le circuit de refroidissement entre en action lorsque la température de l'eau atteint une valeur déterminée.

Le circuit d'air de refroidissement du moteur comprend généralement un ou plusieurs groupes motoventilateurs, une buse de support pour les groupes, des carénages de calandre et un thermocontact pour le déclenchement des groupes motoventilateurs. Le refroidissement par ce circuit d'air se fait en calandre. Il est alimenté soit par le flux d'air dynamique lorsque le véhicule circule, soit par le groupe motoventilateur quand la vitesse est très faible et que le refroidissement est insuffisant. L'air traverse le radiateur et diffuse anarchiquement sous le capot moteur, générant au passage des problèmes thermiques.

Le circuit d'eau du système de chauffage est relié au circuit d'eau du système de refroidissement et comprend comme élément essentiel un dispositif échangeur de chaleur ou aérotherme. L'eau circule continuellement dans l'aérotherme. L'interaction entre les deux circuits est à l'origine de nombreux problèmes de gestion des débits et pressions dans le circuit de refroidissement.

Le circuit d'air du système de chauffage est totalement indépendant de celui du circuit de refroidissement et comporte de manière générale un boîtier de chauffage comprenant un groupe motoventilateur, et des volets de mixage de l'air, des conduits et gaines de chauffage, et un thermocontact pour le déclenchement du groupe motoventilateur. Le circuit d'air de chauffage est alimenté par une prise sur la plage d'auvent. Le groupe motoventilateur aspire l'air et l'envoie dans le boîtier de chauffage où il est distribué soit dans le circuit d'air froid, soit dans le circuit d'air chaud pour traverser l'aérotherme, soit les deux à la fois. L'air débouche ensuite dans l'habitacle par différents aérateurs.

Les dispositifs échangeurs de chaleur ou radiateurs utilisés à l'heure actuelle sont des ensembles rectangulaires comprenant un faisceau de plaques rectangulaires creuses réunies à une boîte d'entrée et une boîte de sortie de liquide de refroidissement dans lesquelles circule le liquide de refroidissement du moteur. Le liquide chaud provenant du circuit de refroidissement du moteur circulant dans le faisceau de plaques est refroidi par de l'airforcé dans les espaces entre les plaques du faisceau. Généralement, afin d'augmenter l'efficacité de l'échange thermique entre le liquide de refroidissement et l'air des ailettes métalliques sont disposées dans les intervalles entre les plaques du faisceau.

Ces systèmes de refroidissement et de chauffage de l'art antérieur présentent de nombreux inconvénients. En particulier, la répartition de l'air n'est pas uniforme sur tout le faisceau, sa géométrie implique une implantation en face avant et des ouvertures en calandre, l'étanchéité du circuit d'air est difficile et coûteuse, les performances thermiques sont réduites du fait du manque d'étanchéité du circuit d'air, la traînée de refroidissement (CX) est aggravée du fait du manque de maîtrise du circuit d'air, la forme rectangulaire du dispositif échangeur de chaleur ne permet pas au groupe motoventilateur d'alimenter tout le faisceau du dispositif. De plus, ils nécessitent un radiateur de chauffage (aérotherme) distinct du radiateur de refroidissement du moteur, et ainsi les calories perdues dans le radiateur de refroidissement ne sont pas récupérées pour le chauffage du véhicule. Ils nécessitent deux entrées d'air, une pour le chauffage, l'autre pour le refroidissement, ils imposent des contraintes de style pour la forme avant du véhicule et accroissent les problèmes thermiques.

Il serait donc souhaitable de réaliser un dispositif échangeur de chaleur qui puisse à la fois servir de radiateur de refroidissement pour le moteur et de radiateur de chauffage pour le circuit de chauffage de l'habitacle. Un tel dispositif échangeur de chaleur permettrait une simplification importante du système de refroidissement et de chauffage, notamment pour véhicule automobile, et en particulier un tel dispositif échangeur de chaleur permettrait de simplifier le circuit d'eau, puisque une branche aérotherme en parallèle au radiateur de refroidissement ne serait plus nécessaire. Un tel dispositif échangeur de chaleur aurait également pour avantages d'éviter de réchauffer le sous capot du fait de la suppression du flux du radiateur de refroidissement de l'art antérieur. Un tel dispositif échangeur de chaleur devrait être réalisé de telle sorte que sa compacité lui confère une implantation plus souple sous le capot.

Il est également souhaitable que ce nouveau dispositif échangeur de chaleur puisse être utilisé dans le circuit de climatisation d'un véhicule automobile, comme condenseur volumique. La compacité de ce dispositif échangeur de chaleur devrait permettre son implantation ailleurs qu'en face avant comme cela est le cas pour les dispositifs échangeurs de chaleur classiques en panneau qui sont généralement montés à côté du radiateur de refroidissement du moteur. Ainsi, le condenseur volumique du système de climatisation comportant un tel dispositif échangeur de chaleur serait séparé du circuit de refroidissement et de chauffage du véhicule.

On atteint les objectifs ci-dessus, selon la présente invention, en réalisant un dispositif échangeur de chaleur entre un premier fluide thermique et un second fluide thermique qui comprend une boîte d'entrée pour recevoir le premier fluide, une boîte de sortie pour décharger le premier fluide et un ensemble d'éléments faisant communiquer l'intérieur de la boîte d'entrée avec l'intérieur de la boîte de sortie, le second fluide circulant autour de cet ensemble d'éléments en relation d'échange thermique avec le premier fluide, caractérisé en ce que les boîtes d'entrée et de sortie sont constituées par des anneaux de section droite quelconque et de révolution ou non et l'ensemble d'éléments est constitué par un faisceau de tubes montés en entretoise entre les boîtes d'entrée et de sortie.

On réalise également selon la présente invention un système compact de refroidissement et de chauffage, notamment pour véhicule automobile, comprenant un groupe motoventilateur relié à-l'entrée d'un dispositif échangeur de chaleur entre un premier fluide et un second fluide, et une tubulure d'évacuation reliée à la sortie du dispositif échangeur de chaleur, le dispositif échangeur de chaleur comprenant une boîte d'entrée pour recevoir le premierfluide, une boîte de sortie pour décharger le premier fluide et un ensemble d'éléments faisant communiquer l'intérieur de la boîte d'entrée avec l'intérieur de la boîte de sortie, le second fluide circulant autour de cet ensemble d'éléments en relation d'échange thermique avec le premier fluide, les boîtes d'entrée et de sortie étant constituées par des anneaux de section droite quelconque et de révolution ou non et l'ensemble d'éléments étant constitué par un faisceau de tubes montés en entretoise entre les boîtes d'entrée et de sortie.

La présente invention réalise également un condenseur volumique pour un circuit de climatisation de véhicule automobile comprenant un ventilateur centrifuge relié à l'entrée d'un dispositif échangeur de chaleur entre un premier fluide et un seconde fluide comprenant une boîte d'entrée pour recevoir le premier fluide, une boîte de sortie pour décharger le premier fluide et un ensemble d'éléments faisant communiquer l'intérieur de la boîte d'entrée avec l'intérieur de la boîte de sortie, le second fluide circulant autour de cet ensemble d'éléments en relation d'échange thermique avec le premier fluide, les boîtes d'entrée et de sortie étant constituées par des anneaux de section droite quelconque et de révolution ou non et l'ensemble d'éléments étant constitué par un faisceau de tubes montés en entretoise entre les boîtes d'entrée et de sortie.

La suite de la description se réfère aux figures annexées qui représentent respectivement:
figure 1, une vue éclatée d'un dispositif échangeur de chaleur selon la présente invention;
figure 2, une vue schémàtique en coupe d'un dispositif échangeur de chaleur selon la présente invention;
figure 3, une vue de face d'une ailette de rayonnement thermique utilisable dans le dispositif échangeur de chaleur de la présente invention;
figure 4, un système compact de refroidissement et de chauffage comportant le dispositif échangeur de chaleur selon la présente invention;
figure 5, une vue schématique générale montrant une possibilité d'implantation du système de refroidissement et de chauffage selon la présente invention;
figure 6, une vue éclatée d'un condenseur volumique comportant une autre réalisation du dispositif échangeur de chaleur selon la présente invention et adapté pour l'utilisation dans un circuit de climatisation de véhicule automobile; et
figure 7, une vue de face d'une ailette de rayonnement thermique utilisable avec l'échangeur de la figure 6.

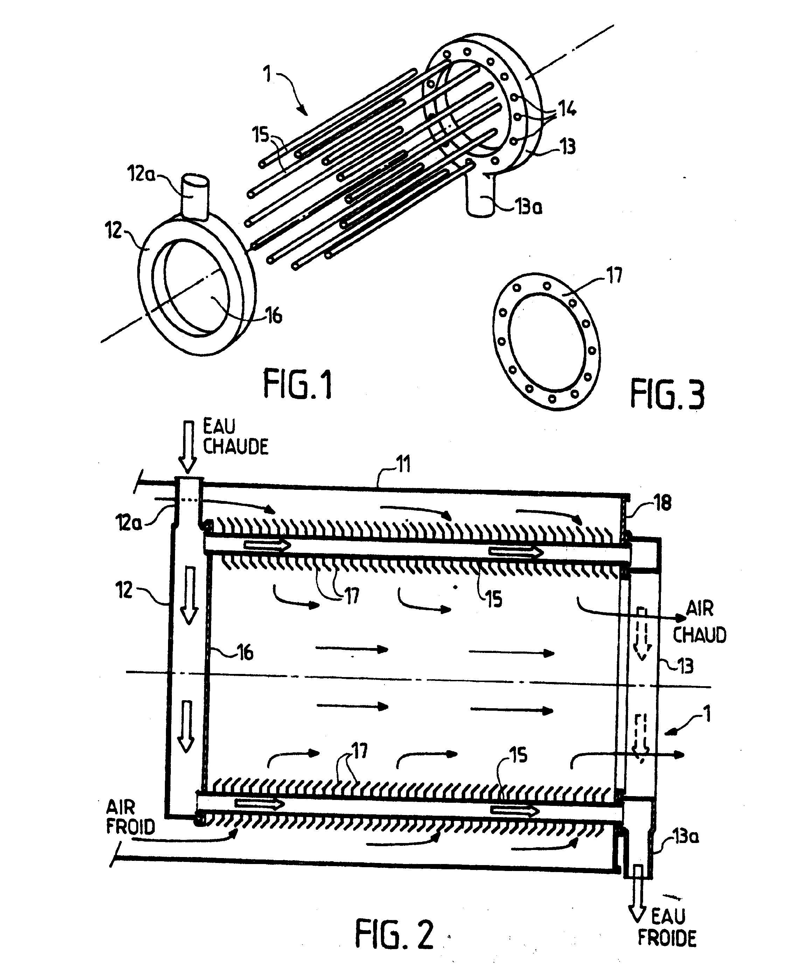

A la figure 1 on a représenté d'une manière générale un dispositif échangeur de chaleur 1 selon la présente invention. Le dispositif échangeur de chaleur de la figure 1 comprend une boîte d'entrée 12 pour un premier fluide (par exemple de l'eau) ayant la forme générale d'un anneau, une boîte de sortie 13 pour le premier fluide ayant la forme générale d'un anneau, et un faisceau de tubes faisant communiquer l'intérieur de la boîte d'entrée avec l'intérieur de la boîte de sortie et disposés en entretoise entre la boîte d'entrée et la boîte de sortie. La boîte d'entrée 12 est pourvue d'une tubulure d'entrée 12a du fluide, et la boîte de sortie 13 est pourvue d'une tubulure de sortie 13a. Les anneaux formant les boîtes d'entrée et de sortie 12 et 13 peuvent être de section droite quelconque, par exemple circulaire, polygonale, carrée ou rectangulaire, et ils peuvent être de révolution ou non. Par exemple, les anneaux peuvent être circulaires, de forme ovale, ou peuvent être des anneaux polygonaux tels que des anneaux carrés ou rectangulaires. Les tubes 15 du faisceau sont des tubes rectilignes, de section droite quelconque, par exemple circulaire, polygonale telle que carrée ou rectangulaire, et sont montés en entretoise entre la boîte d'entrée 12 et la boîte de sortie afin d'acheminer le premier fluide depuis la boîte d'entrée 12 jusqu'à la boîte de sortie 13. Les tubes 15 peuvent être munis d'ailettes de rayonnement therrnique améliorant l'échange de chaleur entre le premier fluide traversant les boîtes d'entrée et de sortie et les tubes du faisceau et le second fluide circulant autour des tubes 15 du faisceau. Les tubes 15 sont réunis aux boîtes d'entrée et de sortie 12, 13 par introduction dans les orifices 14 ménagés dans les anneaux des boîtes d'entrée et de sortie.

Comme on l'a représenté à la figure 2, l'ensemble des boîtes d'entrée et de sortie 12, 13 et du faisceau de tubes 15 est généralement contenu dans une enceinte de forme adaptée à celle des boîtes d'entrée et de sortie, dans le cas présent circulaire, comportant une paroi latérale 11 et une paroi terminale 18. L'enceinte a un diamètre intérieur supérieur aux diamètres extérieurs des boîtes d'entrée et de sortie et du faisceau de tubes afin de réaliser un espace entre les surfaces radialement extérieures des boîtes d'entrée et de sortie et du faisceau de tubes et la paroi latérale 11 de l'enceinte permettant ainsi le passage du second fluide de l'extérieur du faisceau de tubes 15 vers l'intérieur du faisceau ou de l'intérieur de ce faisceau vers l'extérieur. Généralement, la boîte d'entrée 12 comporte une cloison 16 fermant son ouverture centrale. Egalement, l'enceinte comprend une paroi terminale 18 au droit de la boîte de sortie 13 fermant l'espace entre la surface radialement extérieure de la boîte de sortie 13 et la paroi latérale 11 de l'enceinte. L'ouverture centrale de la boîte de sortie 13 communique alors librement avec l'extérieur du dispositif échangeur de chaleur.

En fonctionnement, la boîte d'entrée 12 reçoit par l'entrée 12a le premier fluide, en général de l'eau chaude provenant du moteur d'un véhicule automobile. Cette eau circule à l'intérieur de la boîte d'entrée et s'écoule par les tubes 15 du faisceau jusque dans la boîte de sortie 13 pour s'évacuer par la tubulure de sortie 13a de la boîte de sortie 13. Un second fluide, en général de l'airfroid (pris à l'extérieur d'un véhicule automobile) est dirigé sur la boîte d'entrée 12. Ce flux d'air froid est dévié par la cloison 16 de la boîte d'entrée et est forcé dans l'espace compris entre la paroi latérale 11 de l'enceinte et les surfaces radialement extérieures des boîtes et du faisceau de tubes 15. La paroi terminale 18 de l'enceinte force le courant d'air froid à circuler autour du faisceau de tubes pour s'échapper par l'ouverture centrale libre de la boîte de sortie 13. La circulation de l'eau chaude dans le faisceau de tubes 15 et de l'airfroid autour de ce faisceau de tubes 15 provoque un échange de chaleur entre l'air froid et l'eau chaude, refroidissant l'eau et réchauffant l'air. 11 est évident que l'on peut inverser le sens de circulation de l'airfroid. Par exemple, l'ouverture centrale de la boîte d'entrée 12 peut être laissée libre et la paroi terminale 18 de l'enceinte peut être disposée au droit de la boîte d'entrée 12. Dans ce cas, bien évidemment, l'ouverture centrale de la boîte de sortie 13 serait obturée par une cloison analogue à la cloison 16 de la boîte d'entrée de la figure 1 et l'espace compns entre la paroi latérale 11 de l'enveloppe et la surface radialement extérieure de la boîte de sortie 13 serait laissé libre pour l'échappement de l'air réchauffé.

Comme on l'a indiqué précédemment, on peut prévoir des ailettes de rayonnement thermique sur les tubes 15 du faisceau. On peut utiliser tous types et formes d'ailettes convenables.

On a représenté à la figure 3 un type d'ailette utilisable dans le dispositif échangeur de chaleur de la présente invention. L'ailette 17 de la figure 3 se compose d'un disque métallique pourvu d'ouvertures réparties régulièrement selon la circonférence et d'un nombre égal à celui des tubes 15 du faisceau. Ces ailettes sont embrochées sur les tubes 15 du faisceau et sont réparties régulièrement suivant la direction axiale du dispositif échangeur de chaleur. Comme cela est bien connu, ces ailettes ont pour but d'augmenter la capacité d'échange thermique du dispositif échangeur de chaleur. Bien évidemment la forme des ailettes est adaptée à celle des boîtes d'entrée et de sortie. Par exemple, si les boîtes d'entrée et de sortie sont des anneaux de forme carrée ou rectangulaire, les ailettes seront constituées par des plaques annulaires de forme carrée ou rectangulaire, respectivement. Dans un mode de réalisation recommandé, les parties radialement extérieures des ailettes 17 sont inclinées axialement.

On a ainsi réalisé un dispositif échangeur de chaleur dont la compacité permet son implantation plus souple sous le capot d'un véhicule automobile. Ainsi le concepteur a toute liberté pour le style de la forme avant du véhicule. Du fait que le faisceau de tubes du dispositif échangeur de chaleur soit totalement et uniformément traversé par le second fluide, le dispositif échangeur de chaleur assure des performances thermiques supérieures. De plus lorsque le dispositif échangeur de chaleur est de forme circulaire il permet de tirer un meilleur parti du groupe motoventilateur.

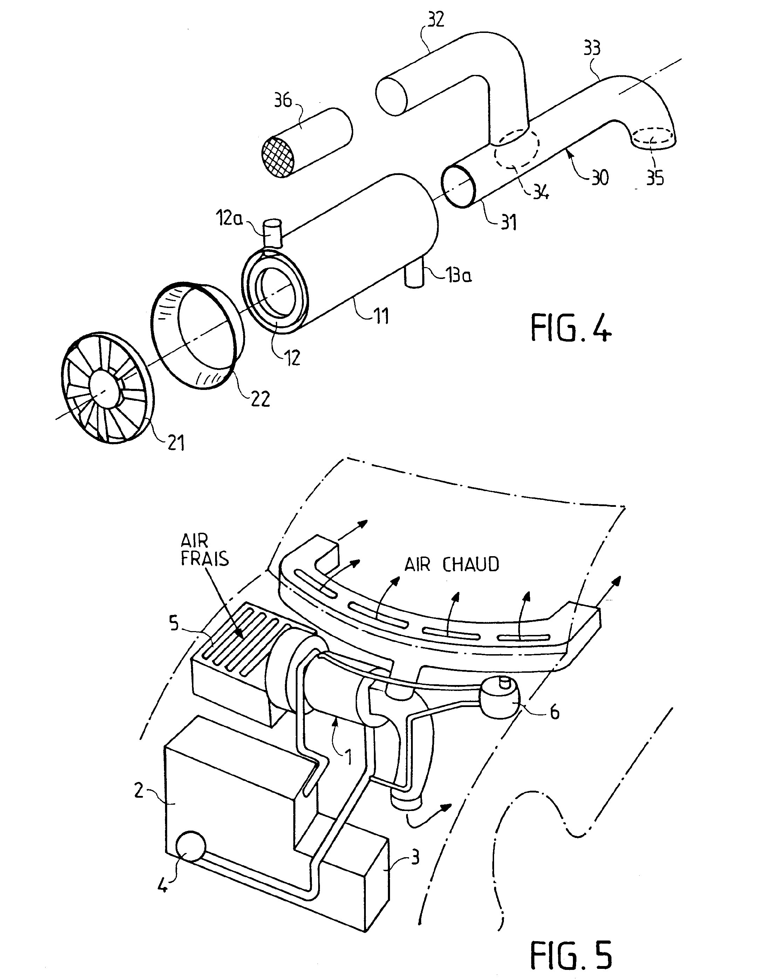

On a représenté à la figure 4 un système compact de refroidissement et de chauffage. notamment pour un véhicule automobile, qui comporte le dispositif échangeur de chaleur de la présente invention. Le système compact de refroidissement et de chauffage selon la présente invention comprend un groupe motoventilateur 21 réuni par une buse de montage 22 à un dispositif échangeur de chaleur analogue à celui décrit en liaison aux figures 1 à 3, et une tubulure d'évacuation 30 comportant une partie de raccordement 31 reliée au dispositif échangeur de chaleur et deux branches de décharge du fluide réchauffé 32 et 33. La première branche 32 est réunie à un dispositif de chauffage de l'habitacle d'un véhicule automobile (non représenté). La seconde branche 33 évacue le fluide de chauffage vers l'extérieur. Un premier volet 34 situé dans la première branche 32 permet d'ouvrir et de fermer cette branche ainsi que de réguler le débit du fluide de chauffage. Un second volet 35 situé à l'extrémité de la seconde branche de décharge 33 permet de mettre cette seconde branche en communication ou non avec l'extérieur. Généralement on prévoit un filtre à air 36 dans la première branche 32 afin d'éliminer les particules qui pourraient être entraînées par l'air de chauffage et éviter que celles-ci n'atteignent le système de distribution d'air de chauffage.

Le dispositif échangeur de chaleur est relié au circuit de fluide de refroidissement du moteur du véhicule automobile. En général la tubulure 12a d'entrée de la boîte d'entrée 12 se trouve à la partie supérieur du dispositif échangeur de chaleur afin de permettre un dégazage du fluide de refroidissement, cependant que la tubulure 13a de sortie de la boîte de sortie 13 est située à la partie inférieure du dispositif échangeur de chaleùr afin de permettre une évacuation aisée du fluide de refroidissement.

Dans le nouveau système compact de refroidissement et de chauffage selon la présente invention un seul dispositif échangeur de chaleur sert à la fois au refroidissement du fluide de refroidissement du moteur et au chauffage de l'air du circuit de chauffage de l'habitacle.

En fonctionnement, le dispositif échangeur de chaleur reçoit le fluide de refroidissement chauffé par le moteur, (en général de l'eau chaude) par la tubulure d'entrée 12a. Cette eau chaude circule dans l'échangeur de chaleur par l'intermédiaire des tubes 15 et s'évacue par la boîte de sortie 13 et la tubulure de sortie 13a pour retourner au circuit de refroidissement du moteur sous forme d'un courant d'eau refroidi. Simultanément de l'air traverse le dispositif échangeur de chaleur soit sous l'effet d'un flux d'air dynamique, lorsque le véhicule circule, soit sous l'effet du groupe motoventilateur quand la vitesse est trop faible. Cet air s'écoule tout d'abord dans l'espace entre la paroi latérale 11 de l'enceinte et la périphérie de la boîte d'entrée 12 et du faisceau de tubes 15, puis entre les tubes pour s'évacuer par l'ouverture centrale libre de la boîte de sortie 13 et enfin par la tubulure d'évacuation 30. Au cours du passage dans le dispositif échangeur de chaleur l'air relativement frais qui y circule se réchauffe au contact de l'eau de refroidissement chaude cependant que l'eau relativement chaude se refroidit au contact de l'air. L'air chaud sortant par la tubulure d'évacuation 30 peut être, à l'aide des volets 34 et 35, envoyé soit à l'extérieur du véhicule soit dans le circuit de chauffage de l'habitacle. Ainsi, en ouvrant le volet 34 et en fermant le volet 35 l'air chaud sortant du dispositif échangeur de chaleur sera acheminé par la branche 32 vers le dispositif de chauffage de l'habitacle où il peut ou non être mélangé avec de l'air frais pris à l'extérieur du véhicule, pour ensuite être réparti par différents aérateurs dans l'habitacle. Inversement lorsque le volet 34 est fermé et le volet 35 ouvert l'air chaud est directement évacué à l'extérieur du véhicule.

Le présent système compact de refroidissement et de chauffage présente de nombreux avantages par rapport au système de l'art antérieur. En premier lieu il permet l'utilisation d'un seul dispositif échangeur de chaleur servant à la fois au refroidissement du fluide de refroidissement du moteur et au chauffage de l'air de chauffage de l'habitacle. De plus sa compacité lui permet une implantation plus souple sous le capot du véhicule. Ainsi le concepteur a toute liberté pour le style de la forme avant du véhicule. Comme avec le présent système compact de refroidissement et de chauffage un dispositif échangeur de chaleur propre au circuit du fluide de refroidissement du moteur n'est plus nécessaire, on évite ainsi un réchauffement du sous capot par suppression du flux thermique dû à ce dispositif échangeur de chaleur. De plus, il permet un circuit de fluide de refroidissement simplifié, car la branche aérotherme en parallèle au dispositif échangeur de chaleur du fluide de refroidissement du moteur n'est plus nécessaire. Egalement, on réduit ainsi le volume de fluide de refroidissement circulant dans le circuit de refroidissement du moteur.

On a représenté à la figure 5 un mode d'implantation du système compact de refroidissement et de chauffage selon la présente invention. Comme on le voit sur cette figure 5, le système compact de refroidissement et de chauffage 1 est situé sous le capot en un endroit éloigné du moteur. Les boîtes d'entrée et de sortie du dispositif échangeur de chaleur sont reliées au circuit de fluide de refroidissement du moteur qui ne comprend plus qu'une pompe 4, un vase d'expansion 6 et les tubulures nécessaire à la circulation du fluide de refroidissement. De même le circuit d'air de chauffage de l'habitacle et de refroidissement est simplifié. L'air frais pris à l'extérieur pénètre par des évents 5 et soit s'écoule directement soit est forcé par le groupe moto ventilateur dans le dispositif échangeur de chaleur. L'air une fois réchauffé après passage dans le dispositif échangeur de chaleur peut être distribué à l'habitacle par l'intermédiaire d'aérateurs ou directement rejeté vers l'extérieur en un endroit qui ne pénalise pas les échanges thermiques du moteur.

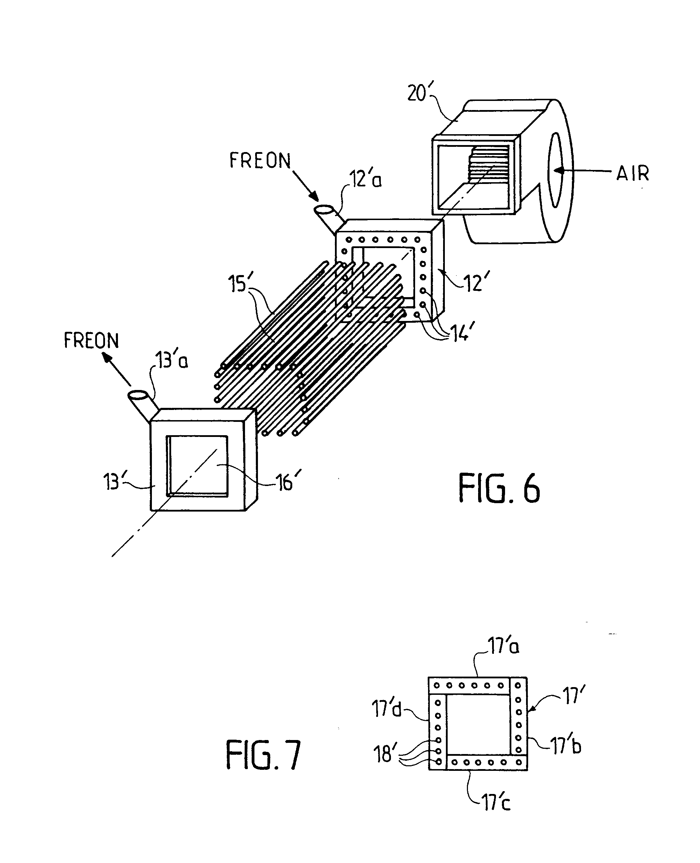

On a représenté à la figure 6 une autre réalisation du dispositif échangeur de chaleur selon la présente invention en liaison avec son application à un circuit de climatisation pour véhicule automobile. Les circuits actuels de climatisation par refroidissement avec un hydrocarbure chlorofluoré (par exemple du fréon) comportent généralement un dispositif échangeur de chaleur de type classique en panneau. Il est généralement monté à côté du radiateur de refroidissement du véhicule, juste devant lui. La chaleur dégagée par le condenseur pénalise, sous l'aspect thermique, les performances du circuit de refroidissement du moteur. La chaleur contenue dans le circuit du fluide de refroidissement est généralement évacuée sous le capot moteur. Comme le parcours de l'air n'est pas géré il en résulte un réchauffement de l'air du sous capot et des pertes au niveau de l'efficacité thermique et des problèmes de température sous capot. L'utilisation d'un dispositif échangeur de chaleur selon la présente invention permet d'obtenir un condenseur volumique qui par sa compacité, peut être implanté ailleurs qu'en face avant du véhicule. Il se trouve ainsi séparé du circuit de refroidissement et de chauffage.

Comme le montre la figure 6, le condenseur volumique selon la présente invention comprend un ventilateur centrifuge 20' relié à un dispositif échangeur de chaleur analogue à celui décrit en liaison avec les figures 1 et 2. Le dispositif échangeur de chaleur utilisé dans le condenseur volumique de la présente invention se compose d'une boîte d'entrée de fluide de refroidissement 12', d'une boîte de sortie de fluide de refroidissement 13' et d'un faisceau de tubes 15' faisant communiquer l'intérieur de la boîte d'entrée 12' avec l'intérieur de la boîte de sortie 13' et montés en entretoise entre les boîtes d'entrée et de sortie. Dans le cas du condenseur volumique du circuit de climatisation, l'ouverture centrale de la boîte de sortie 13' est généralement fermée par une cloison 16', cependant que l'ouverture centrale de la boîte d'entrée 12' n'est pas obstruée afin de permettre à l'air fourni par le ventilateur centrifuge 20' de pénétrer dans le dispositif échangeur de chaleur et de circuler autour des tubes 15' du faisceau. Il est également souhaitable de prévoir des ailettes de rayonnement thermique 17' analogue à celles utilisées précédemment. De préférence dans la présente application, les boîtes d'entrée 12' et de sortie 13' ont la forme d'anneaux carrés ou rectangulaires comportant respectivement une tubulure d'entrée 12'a et une tubulure de sortie 13'a. De préférence également, les ailettes de rayonnement thermique seront des plaques annulaires de forme carrée ou rectangulaire analogue aux boîtes d'entrée et de sortie 12' et 13'.

On a représenté à la figure 7 une ailette recommandée. L'ailette 17' est de forme carrée et comporte quatre côtés 17'a à 17'd. Des ouvertures 18' sont ménagées dans les côtés 17'a à 17'd de l'ailette 17'. Les ailettes sont embrochées sur les tubes 15' du faisceau qui traversent les ouvertures 18' et sont réparties régulièrement suivant la direction axiale du condenseur. En fonctionnement, le fluide de refroidissement du circuit de climatisation, généralement un hydrocarbure fluoré ou chlorofluoré, pénètre dans la boîte d'entrée 12' par l'entrée 12'a parcoure les tubes 15' du faisceau et ressort par la boîte de sortie 13' et la tubulure de sortie 13'a pour retourner au circuit de climatisation. De l'air frais. forcé par le ventilateur centrifuge, pénètre dans le dispositif échangeur de chaleur par l'ouverture centrale de la boîte d'entrée 12'et s'évacue sous le capot en circulant autour des tubes 15' du dispositif échangeur de chaleur. L'air frais en contact d'échange thermique avec le fluide de refroidissement du circuit de climatisation se trouve réchauffé cependant que le fluide de refroidissement du circuit de climatisation se trouve refroidi avant d'être renvoyé dans le circuit de climatisation.

Le condenseur que l'on vient de décrire par sa compacité permet une implantation ailleurs qu'en face avant du véhicule et donc permet un dégagement d'air réchauffé en un endroit éloigné du circuit de refroidissement du moteur et une meilleure gestion des échanges thermiques sous capot. De plus, la forme carrée ou rectangulaire recommandée du dispositif échangeur de chaleur du condenseur volumique de la présente invention s'adapte mieux au ventilateur centrifuge, ce qui permettra d'optimiser l'alimentation de la roue du ventilateur pour un meilleur rendement de celui-ci.

On a donc réalisé selon la présente invention un nouveau dispositif échangeur de chaleur particulièrement adapté pour être utilisé soit dans des circuits de refroidissement et de chauffage d'un véhicule automobile soit dans les circuits de climatisation de tels véhicules.

## Revendications

1. Dispositif échangeur de chaleur (1) entre un premier fluide thermique et un second fluide thermique comprenant une boîte d'entrée (12) recevant le premier fluide thermique, une boîte de sortie (13) déchargeant le premier fluide thermique et un ensemble d'éléments (15) faisant communiquer l'intérieur de la boîte d'entrée (12) avec l'intérieur de la boîte de sortie (13), le second fluide thermique circulant autour de cet ensemble d'éléments (15) en relation d'échange thermique avec le premier fluide thermique, caractérisé en ce que les boîtes d'entrée et de sortie (12, 13) sont constituées par des anneaux de section droite quelconque et de révolution ou non et l'ensemble d'éléments (15) est constitué par un faisceau de tubes montés en entretoise entre les boîtes d'entrée et de sortie (12, 13).

2. Dispositif selon la revendication 1, caractérisé en ce que les boîtes d'entrée et de sortie (12, 13) sont constituées par des anneaux circulaires, carrés ou rectangulaires.

3. Dispositif selon la revendication 1 ou 2, caractérisé en ce que les tubes (15) sont pourvus d'ailettes (17) de rayonnement thermique.

4. Dispositif selon la revendication 3, caractérisé en ce que les ailettes sont constituées par des plaques annulaires de forme semblable aux boîtes d'entrée et de sortie (12,13) embrochées sur les tubes (15) et réparties régulièrement suivant la direction axiale du faisceau de tubes.

5. Dispositif selon la revendication 4, caractérisé en ce que ailettes (17) ont des parties radialement extérieures inclinées axialement.

6. Dispositif selon l'une quelconque des revendications précédentes, caractérisé en ce que l'ouverture centrale de l'une des boîtes d'entrée ou de sortie (12, 13) est obturée par une cloison (16).

7. Dispositif selon la revendication 6, caractérisé en ce que l'ouverture centrale de la boîte de sortie (13) est obturée par la cloison (16).

8. Dispositif selon l'une quelconque des revendications précédentes, caractérisé en ce qu'il comprend en outre une enceinte comportant une paroi latérale (11) entourant l'ensemble des boîtes d'entrée et de sortie (12, 13) et du faisceau de tubes (15) et une plaque terminale (18), la paroi latérale (11) de l'enceinte ayant un diamètre intérieur supérieur aux diamètres extérieurs des boîtes d'entrée et de sortie et du faisceau de tube pour former un espace entre cette paroi latérale et les surfaces radialement extérieures des boîtes d'entrée et de sortie et du faisceau de tubes, et la plaque terminale (18) fermant ledit espace au droit de celle des boîtes d'entrée ou de sortie (12, 13) dont l'ouverture centrale n'est pas obturée par la cloison (16).

9. Système compact de refroidissement et de chauffage pour un véhicule automobile comprenant un groupe motoventilateur relié à l'entrée d'un dispositif échangeur de chaleur (1), et une tubulure d'évacuation (30) reliée à la sortie du dispositif échangeur de chaleur caractérisé en ce que le dispositif échangeur de chaleur est tel que défini à la revendication 8.

10. Système selon la revendication 9, caractérisé en ce que le premier fluide circulant dans le dispositif échangeur de chaleur est de l'eau chaude provenant d'un circuit de refroidissement d'un moteur de véhicule automobile et le second fluide est de l'air frais prélevé à l'extérieur du véhicule, l'air frais traversant le dispositif échangeur de chaleur refroidissant l'eau du circuit de refroidissement du moteur et s'échappant dans la tubulure d'évacuation (30) sous forme d'un courant d'air chaud.

11. Système selon la revendication 10, caractérisé en ce que la tubulure d'évacuation (30) comprend une première branche (32) pour la fourniture d'un courant d'air chaud à l'habitacle du véhicule automobile et une seconde branche (33) pour décharger ce courant d'air chaud vers l'extérieur, un premier volet (34) pour ouvrir ou fermer la première branche (32) et un second volet (35) pour ouvrir ou fermer la seconde branche (33), le courant d'air chaud sortant du dispositif échangeur de chaleur (1) étant acheminé vers l'habitacle par la première branche (32) lorsque le premier volet (34) est ouvert et le second volet (35) fermé, et vers l'extérieur lorsque le premier volet (34) est fermé et le second volet (35) ouvert.

12. Ensemble condenseur pour un circuit de climatisation de véhicule automobile comprenant un ventilateur centrifuge (20') relié à l'entrée d'un dispositif échangeur de chaleur, caractérisé en ce que ledit dispositif échangeur de chaleur est tel que défini selon l'une quelconque des revendications 1 à 8.

13. Ensemble selon la revendication 12, caractérisé en ce que le premier fluide est un hydrocarbure fluoré ou chlorofluoré du circuit de climatisation du véhicule automobile et le second fluide est de l'air frais prélevé à l'extérieur du véhicule, l'air frais traversant le dispositif échangeur de chaleur refroidissant l'hydrocarbure fluoré ou chlorofluoré du circuit de climatisation du véhicule et s'échappant sous forme d'un courant d'air chaud.
